# EUROPEAN PATENT APPLICATION

(11) **EP 4 304 038 A1**
(43) Date of publication of application: **10.01.2024**
(21) Application number: 22183154.8
(22) Date of filing: 05.07.2022
(51) Int. Cl.: H02J 3/32, H02J 3/18, H02M 7/483

(54) **ELECTRICAL ASSEMBLY COMPRISING A VOLTAGE SOURCE CONVERTER AND AN ENERGY STORAGE SYSTEM**

(71) Applicant: General Electric Technology GmbH, 5400 Baden (CH)
(72) Inventor: BARKER, Carl, Stafford, ST16 1WS (GB); BRIFF, Pablo, Stafford, ST16 1WS (GB); DAVIDSON, Colin, Stafford, ST16 1WS (GB)
(74) Representative: Openshaw & Co.

(57) **Abstract**

An electrical assembly (52) comprises:
a voltage source converter (20) including at least one energy storage device (48);
an energy storage system (54) electrically coupled to the voltage source converter (20), the energy storage system (54) controllable to release and absorb energy; and
a controller (50,56) programmed to selectively trigger a control of the energy storage system (54) to release energy or absorb energy responsive to a measurement of stored energy in the voltage source converter (20).

## Description

This invention relates to an electrical assembly, preferably for use in high voltage direct current (HVDC) transmission and reactive power compensation.

In HVDC power transmission networks AC power is typically converted to DC power for transmission via overhead lines, under-sea cables and/or underground cables. This conversion removes the need to compensate for the AC capacitive load effects imposed by the power transmission medium, i.e. the transmission line or cable, and reduces the cost per kilometre of the lines and/or cables, and thus becomes cost-effective when power needs to be transmitted over a long distance. DC power is also transmitted directly from offshore wind parks to onshore AC power transmission networks. The conversion between DC power and AC power is utilised where it is necessary to interconnect DC and AC networks. In any such power transmission network, converters (i.e. power converters) are required at each interface between AC and DC power to affect the required conversion from AC to DC or from DC to AC.

According to an aspect of the invention, there is provided an electrical assembly comprising:
a voltage source converter including at least one energy storage device;
an energy storage system electrically coupled to the voltage source converter, the energy storage system controllable to release and absorb energy; and
a controller programmed to selectively trigger a control of the energy storage system to release energy or absorb energy responsive to a measurement of stored energy in the voltage source converter.

Conventionally an energy storage system is configured to release or absorb energy responsive to a measured frequency change event at its point of connection. However, under certain circumstances, an energy storage system configured as such may not be able to respond in time to provide the required energy exchange to address the frequency change event. In one example, if the voltage source converter is configured to support an AC system or network through a dynamic change (e.g., through the use of grid-forming control), then the energy storage system may not detect the need for its operation to exchange energy until after the voltage source converter has reached its limit and stopped supporting the AC system or network. In another example, depending on the energy storage medium, there may be a finite time between the measurement of the frequency change event and the response of the energy exchange system, thus leading to a further change in AC frequency. On the other hand, whilst a voltage source converter with inbuilt energy storage capabilities can respond quickly and thereby provide fast-acting energy exchange, it is unsuitable for long-term energy exchange due to its limited stored energy.

Configuring the control of the energy storage system to be triggered by the measured stored energy in the voltage source converter reduces the reliance on the voltage source converter for energy exchange. This not only reduces the energy disturbance experienced by the or each energy storage device of the voltage source converter but also ensures that energy exchange by the energy storage system is available even when the voltage source converter is unable to provide the required energy exchange. Hence, coordination of the energy storage system and the voltage source converter in accordance with the invention provides for a conditional hand-over of energy exchange duties from the voltage source converter to the energy storage system, which improves the overall reliability and performance of the electrical assembly and associated electrical systems or networks.

In a preferred embodiment of the invention, the voltage source converter may include at least one module, the or each module including at least one switching element and at least one energy storage device, the or each switching element and the or each energy storage device in the or each module arranged to be combinable to selectively provide a voltage source. The voltage source converter may be, for example, a modular multilevel converter.

The energy storage system may be controlled to exchange energy with different parts of the electrical assembly depending on requirements of the electrical assembly.

In embodiments of the invention, the controller may be programmed to selectively trigger a control of the energy storage system to release energy to or absorb energy from the voltage source converter responsive to the measurement of stored energy in the voltage source converter. This enables the energy storage system to act as an energy sink or source for the voltage source converter in order to replenish or reduce the energy stored in the voltage source converter, thus improving the reliability and performance of the voltage source converter.

In further embodiments of the invention, the controller may be programmed to selectively trigger a control of the energy storage system to release energy to or absorb energy from an AC or DC system or network connected to the voltage source converter responsive to the measurement of stored energy in the voltage source converter. This enables the energy storage system to act as an energy sink or source to provide support in the event of a disturbance in the AC or DC system or network. This not only improves the reliability and performance of the AC or DC system or network but also reduces or removes the reliance on the availability of the voltage source converter to provide support. This also reduces or eliminates the need for a system to rapidly dissipate energy during emergency conditions, such as a dynamic braking resistor.

The triggering of the control of the energy storage system to release energy or absorb energy responsive to a measurement of stored energy in the voltage source converter applies when the voltage source converter is available and able to operate in normal condition. In the event of the voltage source converter becoming unavailable, e.g. due to a hardware fault, then the triggering of the control of the energy storage system to release energy or absorb energy may be reconfigured to be activatable in other ways, non-limiting examples of which are described as follows.

In a first example, the controller may be programmed to selectively trigger the control of the energy storage system to release energy or absorb energy responsive to a measurement of AC frequency of an AC system or network connected to the voltage source converter in the event of non-availability of the voltage source converter. In such embodiments, the controller may be programmed to selectively trigger the control of the energy storage system to release energy or absorb energy responsive to a rate of change in AC frequency of an AC system or network connected to the voltage source converter in the event of non-availability of the voltage source converter.

In a second example, the controller may be programmed to selectively trigger the control of the energy storage system to release energy or absorb energy responsive to a measurement of DC voltage of a DC system or network connected to the voltage source converter in the event of non-availability of the voltage source converter. In such embodiments, the controller may be programmed to selectively trigger the control of the energy storage system to release energy or absorb energy responsive to a rate of change of DC voltage of a DC system or network connected to the voltage source converter in the event of non-availability of the voltage source converter.

Such reconfiguration of the triggering of the control of the energy storage system to release energy or absorb energy enables the energy storage system to continue functioning in the absence of the measurement of stored energy in the voltage source converter, and thereby continue to provide energy exchange support during the non-availability of the voltage source converter.

In embodiments of the invention, the controller may be programmed to selectively modify a voltage and/or an impedance of the voltage source converter so as to modify the release or absorption of energy by the energy storage system. This provides a way to control current flow in the electrical assembly to influence which part of the electrical assembly exchanges energy with the energy storage system.

In further embodiments of the invention, the controller may be programmed to selectively trigger the control of the energy storage system to release energy or absorb energy responsive to a measurement of stored energy in the voltage source converter deviating from a reference value or range. Such deviation from the reference value or range may indicate, but is not limited to, an abnormal or non-operating status of the voltage source converter, the stored energy being not sufficient to meet a power demand or requirement, or the stored energy in the voltage source converter exceeding an operational or safety threshold.

The measurement of stored energy may include, but is not limited to, a measurement of absolute stored energy, a measurement of average stored energy, a measurement of a change in stored energy and/or a measurement of a rate of change in stored energy. The measurement of stored energy may include, but is not limited to, a measurement of total stored energy in the voltage source converter, a measurement of stored energy in one or more individual energy storage devices and/or a measurement of stored energy per converter phase of the voltage source converter.

Preferably the energy storage system is connected on an AC side or a DC side of the voltage source converter.

The or each module may vary in configuration, non-limiting examples of which are set out as follows.

In a first exemplary configuration of a module, the or each switching element and the or each energy storage device in the module may be arranged to be combinable to selectively provide a unidirectional voltage source. For example, the module may include a pair of switching elements connected in parallel with an energy storage device in a half-bridge arrangement to define a 2-quadrant unipolar module that can provide zero or positive voltage and can conduct current in two directions. In a second exemplary configuration of a module, the or each switching element and the or each energy storage device in the module may be arranged to be combinable to selectively provide a bidirectional voltage source. For example, the module may include two pairs of switching elements connected in parallel with an energy storage device in a full-bridge arrangement to define a 4-quadrant bipolar module that can provide negative, zero or positive voltage and can conduct current in two directions.

A plurality of modules may be connected in series to define a chain-link converter. The structure of the chain-link converter permits build-up of a combined voltage across the chain-link converter, which is higher than the voltage available from each of its individual modules, via the insertion of the energy storage devices of multiple modules, each providing its own voltage, into the chain-link converter. In this manner switching of the or each switching element in each module causes the chain-link converter to provide a stepped variable voltage source, which permits the generation of a voltage waveform across the chain-link converter using a step-wise approximation. Hence the chain-link converter is capable of providing a wide range of complex voltage waveforms.

At least one switching element may be a wide-bandgap material based switching element or a silicon semiconductor based switching element. Examples of wide-bandgap materials include, but are not limited to, silicon carbide, boron nitride, gallium nitride and aluminium nitride. At least one switching element may include at least one self-commutated switching device. The or each self-commutated switching device may be an insulated gate bipolar transistor (IGBT), a gate turn-off thyristor (GTO), a field effect transistor (FET), a metal-oxide-semiconductor field-effect transistor (MOSFET), an injection-enhanced gate transistor (IEGT), an integrated gate commutated thyristor (IGCT), a bimode insulated gate transistor (BIGT) or any other self-commutated switching device. The number of switching devices in each switching element may vary depending on the required voltage and current ratings of that switching element. At least one switching element may further include a passive current check element that is connected in anti-parallel with the or each switching device. The or each passive current check element may include at least one passive current check device. The or each passive current check device may be any device that is capable of limiting current flow in only one direction, e.g. a diode. The number of passive current check devices in each passive current check element may vary depending on the required voltage and current ratings of that passive current check element.

The or each energy storage device may be any device that is capable of storing and releasing energy to selectively provide a voltage, e.g. a capacitor, fuel cell or battery.

The or each module may include a single energy storage device or a plurality of energy storage devices.

The configuration of the voltage source converter may vary depending on its operating requirements. In embodiments of the invention, the voltage source converter may include at least one converter limb, the or each converter limb extending between first and second DC terminals, the or each converter limb including first and second limb portions separated by an AC terminal, each limb portion including at least one switching element and/or at least one module. In a preferred embodiment of the invention, the voltage source converter includes three converter limbs, each of which is connectable via the respective AC terminal to a respective phase of a three-phase AC network. It will be appreciated that the voltage source converter may include a different number of converter limbs, each of which is connectable via the respective AC terminal to a respective phase of an AC network with the corresponding number of phases.

It will be appreciated that the use of the terms "first" and "second", and the like, in this patent specification is merely intended to help distinguish between similar features (e.g. the first and second limb portions, etc.), and is not intended to indicate the relative importance of one feature over another feature, unless otherwise specified.

Within the scope of this application it is expressly intended that the various aspects, embodiments, examples and alternatives set out in the preceding paragraphs, and the claims and/or the following description and drawings, and in particular the individual features thereof, may be taken independently or in any combination. That is, all embodiments and all features of any embodiment can be combined in any way and/or combination, unless such features are incompatible. The applicant reserves the right to change any originally filed claim or file any new claim accordingly, including the right to amend any originally filed claim to depend from and/or incorporate any feature of any other claim although not originally claimed in that manner.

Preferred embodiments of the invention will now be described, by way of non-limiting examples, with reference to the accompanying drawings in which:
Figure 1 shows a voltage source converter of an electrical assembly according to an embodiment of the invention;
Figure 2 shows a schematic view of an exemplary half-bridge chain-link module;
Figure 3 shows a schematic view of an exemplary full-bridge chain-link module;
Figure 4 shows an electrical assembly according to an embodiment of the invention, wherein the electrical assembly includes an energy storage system;
Figure 5 shows an equivalent circuit of the electrical assembly of Figure 4;
Figure 6 shows an example trigger logic for an energy storage system; and
Figure 7 shows an example control for an energy storage system.

The figures are not necessarily to scale, and certain features and certain views of the figures may be shown exaggerated in scale or in schematic form in the interests of clarity and conciseness. The following embodiments of the invention are used primarily in AC-DC voltage source conversion in HVDC applications, but it will be appreciated that the following embodiments of the invention are applicable mutatis mutandis to other types of voltage source converters and other applications operating at different voltage levels.

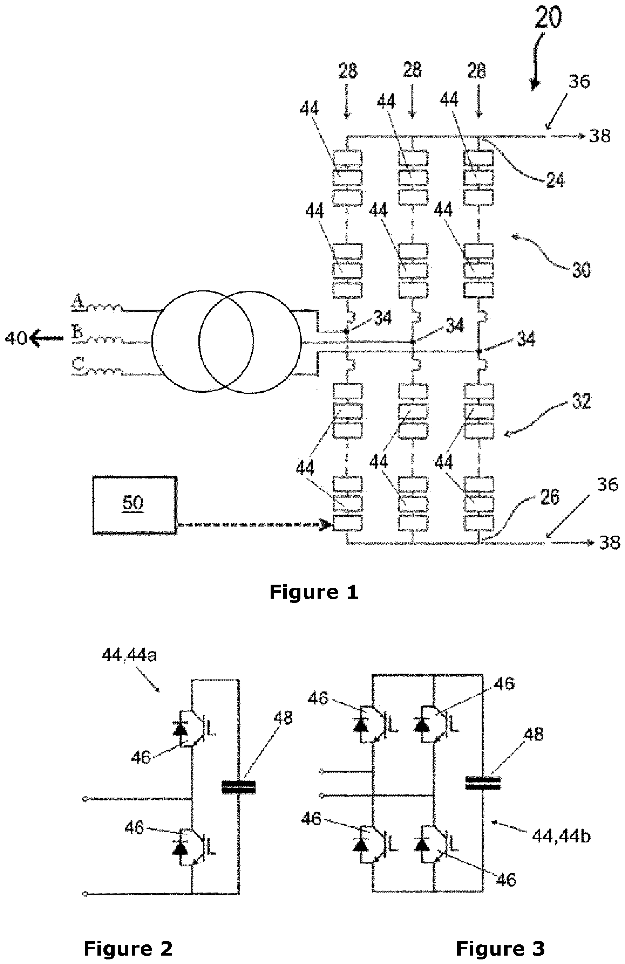

A voltage source converter is shown in Figure 1 and is designated generally by the reference numeral 20. The voltage source converter 20 includes first and second DC terminals 24,26 and a plurality of converter limbs 28. Each converter limb 28 extends between the first and second DC terminals 24,26 and includes first and second limb portions 30,32 separated by a respective AC terminal 34. In each converter limb 28, the first limb portion 30 extends between the first DC terminal 24 and the AC terminal 34, while the second limb portion 32 extends between the second DC terminal 26 and the AC terminal 34. In use, the first and second DC terminals 24,26 of the voltage source converter 20 are respectively connected to a DC network 38 via a point of common coupling 36. In use, the AC terminal 34 of each converter limb 28 of the voltage source converter 20 is connected to a respective AC phase of a three-phase AC network 40 via a point of common coupling 42. The three-phase AC network 40 is an AC power grid 40. Preferably the voltage source converter 20 is implemented as a grid-forming controller at the point of common coupling.

Each limb portion 30,32 includes a switching valve, which includes a chain-link converter that is defined by a plurality of series-connected modules 44. Each module 44 may vary in topology, examples of which are described as follows. Figure 2 shows schematically the structure of an exemplary module 44 in the form of a half-bridge module 44a. The half-bridge module 44a includes a pair of switching elements 46 and a capacitor 48. Each switching element 46 of the half-bridge module 44a is in the form of an IGBT which is connected in parallel with an anti-parallel diode. The pair of switching elements 46 are connected in parallel with the capacitor 48 in a half-bridge arrangement to define a 2-quadrant unipolar module 44a that can provide zero or positive voltage and can conduct current in both directions. Figure 3 shows schematically the structure of an exemplary module 44 in the form of a full-bridge module 44b. The full-bridge module 44b includes two pairs of switching elements 46 and a capacitor 48. Each switching element 46 of the full-bridge module 44b is in the form of an IGBT which is connected in parallel with an anti-parallel diode. The pairs of switching elements 46 are connected in parallel with the capacitor 48 in a full-bridge arrangement to define a 4-quadrant bipolar module 44b that can provide negative, zero or positive voltage and can conduct current in both directions.

The structure of a given module 44 includes the arrangement and type of switching elements 46 and energy storage device 48 used in the given module 44. It will be appreciated that it is not essential for all of the modules 44 to have the same module structure. For example, the plurality of modules 44 may comprise a combination of half-bridge modules 44a and full-bridge modules 44b.

It is envisaged that, in other embodiments of the invention, each switching element 46 of each module 44 may be replaced by a gate turn-off thyristor (GTO), a field effect transistor (FET), a metal-oxide-semiconductor field-effect transistor (MOSFET), an injection-enhanced gate transistor (IEGT), an integrated gate commutated thyristor (IGCT), a bimode insulated gate transistor (BIGT) or any other self-commutated semiconductor device. It is also envisaged that, in other embodiments of the invention, each diode may be replaced by a plurality of series-connected diodes.

The capacitor 48 of each module 44 is selectively bypassed or inserted into the corresponding chain-link converter by changing the states of the switching elements 46. This selectively directs current through the capacitor 48 or causes current to bypass the capacitor 48, so that the module 44 provides a zero or non-zero voltage. The capacitor 48 of the module 44 is bypassed when the switching elements 46 in the module 44 are configured to form a short circuit between the two module terminals in the module 44, whereby the short circuit bypasses the capacitor 48. This causes current in the corresponding chain-link converter to pass through the short circuit and bypass the capacitor 48, and so the module 44 provides a zero voltage, i.e. the module 44 is configured in a bypassed mode. The capacitor 48 of the module 44 is inserted into the corresponding chain-link converter when the switching elements 46 in the module 44 are configured to allow the current in the corresponding chain-link converter to flow into and out of the capacitor 48. The capacitor 48 then charges or discharges its stored energy so as to provide a non-zero voltage, i.e. the module 44 is configured in a non-bypassed mode.

In this manner the switching elements 46 in each module 44 are switchable to control flow of current through the corresponding capacitor 48.

It is possible to build up a combined voltage across each chain-link converter, which is higher than the voltage available from each of its individual modules 44, via the insertion of the capacitors of multiple modules 44, each providing its own voltage, into each chain-link converter. In this manner switching of the switching elements 46 in each module 44 causes each chain-link converter to provide a stepped variable voltage source, which permits the generation of a voltage waveform across each chain-link converter using a step-wise approximation. Hence, the switching elements 46 in each limb portion 30,32 are switchable to selectively permit and inhibit flow of current through the corresponding capacitors 48 in order to control a voltage across the corresponding limb portion 30,32. Thus, the switching of the switching elements 46 are controlled to select zero, one or more of the modules 44 to contribute a or a respective voltage to a switching valve voltage.

It is envisaged that, in other embodiments of the invention, each module 44 may be replaced by another type of module which includes at least one switching element and at least one energy storage device, the or each switching element and the or each energy storage device in each such module arranged to be combinable to selectively provide a voltage source.

It is also envisaged that, in other embodiments of the invention, the capacitor 48 in each module 44 may be replaced by another type of energy storage device which is capable of storing and releasing energy to provide a voltage, e.g. a battery or a fuel cell. It is further envisaged that each module 44 may include more than one energy storage device 48.

The voltage source converter 20 further includes a controller 50 programmed to control the switching of the switching elements 46. For the purposes of simplicity, the controller 50 is exemplarily described with reference to its implementation as a single control unit. In other embodiments, the controller 50 may be implemented as a plurality of control units. The configuration of the controller 50 may vary depending on specific requirements of the voltage source converter 20. For example, the controller 50 may include a plurality of control units, each of which is configured to control the switching of the switching elements 46 of a respective one of the modules 44. Each control unit may be configured to be internal to, or external of, the corresponding module 44. Alternatively, the controller may include a combination of one or more control units internal to the corresponding module 44 and one or more control units external of the corresponding module 44. Each control unit may be configured to communicate with at least one other control unit via telecommunications links.

In order to transfer power between the DC and AC networks 38,40, the controller 50 controls the switching of the switching elements 46 of the modules 44 to switch the capacitors 48 of the respective limb portions 30,32 into and out of circuit between the respective DC and AC terminals 24,26,34 to interconnect the DC and AC networks 38,40. The controller 50 switches the switching elements 46 of the modules 44 of each limb portion 30,32 to provide a stepped variable voltage source between the respective DC and AC terminals 24,26,34 and thereby generate a voltage waveform so as to control the configuration of an AC voltage waveform at the corresponding AC terminal 34 to facilitate the transfer of power between the DC and AC networks 38,40.

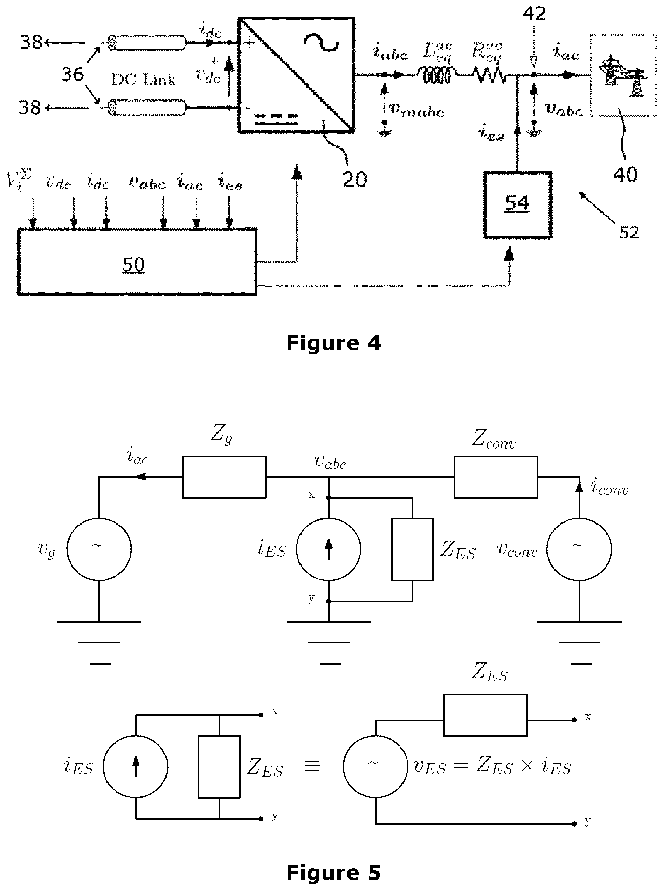

Figure 4 shows an electrical assembly 52 in which the voltage source converter 20 is comprised. The electrical assembly 52 further includes an energy storage system 54 connected in shunt with the electrical connection between the voltage source converter 20 and the AC power grid 40, preferably near or at the point of common coupling with the AC power grid 40. In alternative embodiments, the energy storage system 54 may be connected on the DC side of the voltage source converter 20, e.g., at the point of common coupling 36 to the DC network 38. The energy storage system 54 may include at least one battery, at least one capacitor or other energy storage media.

The controller 50 is programmed to control the voltage source converter to release or absorb energy so as to support the AC power grid 40. The chain-link configuration of the limb portions of the voltage source converter enables the voltage source converter to provide high quality and fast-acting support to the AC power grid 40. However, due to the limited energy storage capacity of the voltage source converter 20, the energy of the voltage source converter 20 will quickly run out in the event of a prolonged duration of the AC power grid 40 requiring support. This will not only cause a drop in DC link voltage at the DC side of the voltage source converter 20 and lead to power quality problems for the voltage source converter 20, but also limit the ability of the voltage source converter 20 to provide timely support to the AC voltage and/or frequency of the AC power grid 40.

The controller 50 is also programmed to control the energy storage system 54 to release or absorb energy so as to either support the AC power grid 40, act as an energy sink or source for the voltage source converter 20 (e.g., for voltage balancing purposes), or both. By providing current support to the AC power grid 40 to aid the frequency and/or voltage recovery, the need for an energy dissipation system (such as a dynamic braking system) is reduced.

More specifically, the controller 50 is programmed to selectively trigger a control of the energy storage system 54 to release energy to or absorb energy from the voltage source converter 20 and/or the AC power grid 40 responsive to a measurement of stored energy in the voltage source converter 20, preferably responsive to a measurement of stored energy in the voltage source converter 20 deviating from a reference value or range. The measurement of stored energy may include, but is not limited to: a measurement of absolute stored energy, a measurement of average stored energy, a measurement of a change in stored energy and/or a measurement of a rate of change in stored energy. The measurement of stored energy may include, but is not limited to, a measurement of total stored energy in the voltage source converter 20, a measurement of stored energy in one or more individual energy storage devices, a measurement of stored energy per limb portion 30,32 of the voltage source converter 20, and/or a measurement of stored energy per converter phase of the voltage source converter 20.

Described below are non-limiting examples of the triggering of the energy storage system 54 to release energy to or absorb energy from the voltage source converter 20 and/or the AC power grid 40 responsive to a measurement of stored energy in the voltage source converter 20.

A representation of the stored energy in the voltage source converter 20 may be exemplarily provided by the total stored energy in each limb portion 30,32, denoted as Vᵢ^{Σ} and V^{Σ} in the figures.

In order to balance the energy in the voltage source converter 20 and/or to provide the necessary support to the AC power grid 40, the energy storage system 54 is controlled to circulate the necessary amount of current dictated by the equivalent circuit of the electrical assembly 52, as shown in Figure 5. The energy storage system current i_{ES} is a function of the measured AC power grid current i_{ac} and the voltage source converter current i_{conv}. The voltage and impedance of the AC power grid 40 are denoted by v_{g} and Z_{g} respectively. The voltage at the point of common coupling is denoted by v_{abc}. The impedance of the energy storage system 54 is denoted by Z_{ES}. The converter impedance Z_{conv} is composed of physical impedance due to reactive and resistive components, as well as electronic impedance due to the control transfer function at different frequencies (e.g., at fundamental frequency). Depending on the AC power grid's needs and the voltage source converter's energy needs, the controller 50 may modify the current i_{ES} of the energy storage system 54 to control its release or absorption of energy so that the energy of the voltage source converter 20 is increased or decreased or that the voltage and/or frequency of the AC power grid 40 is modified to meet a demanded reference. Both the converter equivalent voltage v_{conv} and the electronic ("virtual") part of the converter impedance Z_{conv} may be intentionally modified by the controller 50 in order to favour the current flow from the energy storage system 54 to the voltage source converter 20 or to the AC power grid 40, as required.

When the voltage source converter 20 can no longer satisfy the demands of the AC power grid 40, this is evidenced by a deviation of the stored energy in the voltage source converter 20 from a reference value or range. Hence, while the voltage source converter 20 may be able to provide relatively fast support to the AC power grid 40, reliable long-term support to the AC power grid 40 is provided by the energy storage system 54.

For this reason, the control of the energy storage system 54 may be supplemented with a trigger function that is determined by the total stored energy V^{Σ} in each limb portion 30,32 of the voltage source converter 20. This trigger may be in the form of a digital trigger or may be in the form of a bias value to a detection threshold of the energy storage system 54.

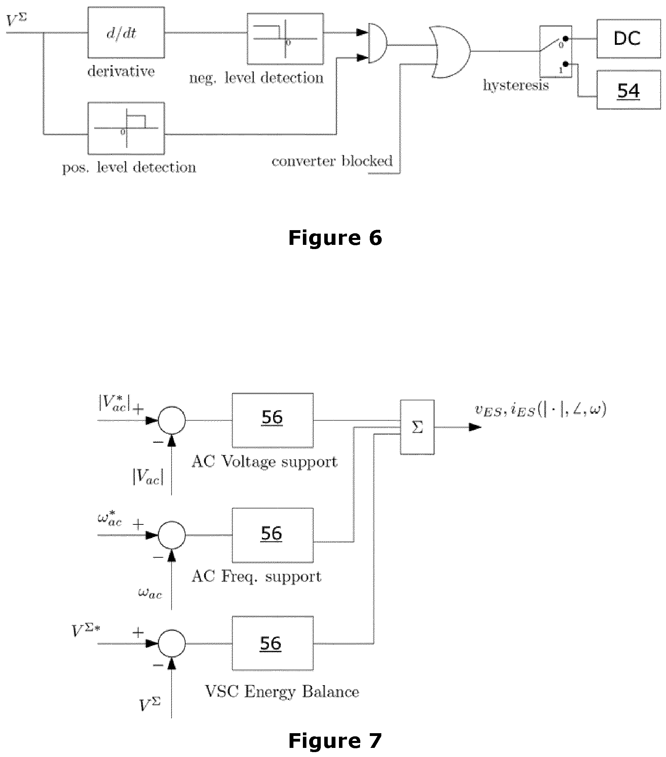

The trigger logic defines whether the energy, in the form of active power into the AC power grid 40, flows from the DC side of the voltage source converter 20 or from the energy storage system 54, as shown in Figure 6. If the total stored energy V^{Σ} in each limb portion 30,32 of the voltage source converter 20 is within an acceptable dead-band around its nominal value, then the DC side of the voltage source converter 20 will act as an energy source to the AC power grid 40. If the total stored energy V^{Σ} in each limb portion 30,32 of the voltage source converter 20 falls outside the acceptable dead-band around its nominal value, then the energy storage system 54 is triggered to act as an energy source to the AC power grid 40 (or to the DC network 38 if the energy storage system 54 is connected to the DC side of the voltage source converter 20).

A hysteresis band can be implemented in the trigger logic to avoid undesired frequent switching between the DC side energy source and the energy storage system 54. Furthermore, the trigger logic may be statically or dynamically modified in order to prioritise the contribution of the energy storage system 54 to the AC power grid 40. This beneficially minimises any additional control-related and electrical network-related (e.g., by an interface transformer) delays introduced in the system response by the voltage source converter 20.

Furthermore, if the voltage source converter 20 is blocked, then the only feasible source of energy for the AC power grid 40 is the energy storage system 54. Conversely, if the energy storage system 54 is connected on the DC side of the voltage source converter 20, the only feasible source of energy for the DC network 38 is the energy storage system 54.

In case the energy storage system 54 requires an increase or decrease of its stored energy reserves, the controller 50 may modify a power reference of the voltage source converter 20 - represented by the switching valves' voltage references - in order to cause net active power to flow into/out of the energy storage system 54 to modify its stored energy reserves.

The control of the energy storage system 54 may involve modification of the energy storage system's output voltage v_{ES} and/or output current i_{ES}, in terms of magnitude, phase and/or frequency, in order to satisfy the energy exchange requirements of the AC power grid's frequency, the AC power grid's voltage magnitude and/or the net energy stored in the voltage source converter 20, as shown in Figure 7. In other embodiments, the energy exchange requirements may include the DC network's energy requirements. Each control unit 56 shown in Figure 7 may be configurable to be selectively enabled and disabled so as to enable or disable the corresponding energy exchange function associated with the AC power grid's frequency, the AC power grid's voltage magnitude or the net energy stored in the voltage source converter 20 depending on the requirements of the overall energy exchange strategy.

The aforementioned triggering of the control of the energy storage system 54 by the measurement of stored energy in the voltage source converter 20 is applicable when the voltage source converter 20 is available and able to operate in normal condition. In case the voltage source converter 20 becomes unavailable, e.g., due to a fault condition in its hardware, then two possible scenarios are described below:
1) If the energy storage system 54 is connected on the AC side of the voltage source converter 20: in this scenario, the triggering of the control of the energy storage system 54 will be configured to be responsive to a rate of change in AC frequency dω_{ac}/dt of the AC power grid 40, instead of V^{Σ} or dV^{Σ}/dt.
2) If the energy storage system 54 is connected on the DC side of the voltage source converter 20: in this scenario, the triggering of the control of the energy storage system 54 will be configured to be responsive to a rate of change in DC voltage dV_{dc}/dt of a DC system or network connected to the voltage source converter 20, instead of V^{Σ} or dV^{Σ}/dt. Preferably the DC voltage in question is the point of common coupling DC voltage.

The invention therefore solves the problem of both AC power grid support (or DC network support if the energy storage system 54 is connected on the DC side of the voltage source converter 20) and voltage source converter control by triggering the control of the energy storage system 54 based on the measured stored energy in the voltage source converter 20. In this way the energy disturbance experienced by the switching valves of the voltage source converter 20 is reduced because otherwise they would be required to dissipate more energy into the AC power grid 40 or, alternatively, the AC power grid 40 would receive inadequate support to maintain its AC frequency following an AC frequency event. This is particularly beneficial for the switching valves of the voltage source converter 20 because too much of a reduction in the stored energy in the switching valves can lead to power quality issues, e.g., the generation of harmonic voltage and current into the AC power grid, and could ultimately lead to a shut-down of the HVDC transmission link or a rapid curtailment of the infeed power which could exacerbate the AC frequency event in the AC power grid 40.

In addition, the invention provides an energy balancing function in support of the voltage source converter 20 and thereby maintains the DC link whilst allowing a rapid response to phase angle changes at the point of common coupling. Furthermore, if an interface transformer is used, its current rating can be minimised because it is not essential for the current between the energy storage system 54 and the AC power grid 40 to flow through the transformer terminals in the case of the energy storage system 54 being connected on the AC side of the voltage source converter 20. If the energy storage system 54 is connected on the DC side of the voltage source converter 20, then power will have to flow though the interface transformer to provide support to the connected AC power grid 40 but support can be provided directly to the DC network 38 without that power having to flow through the interface transformer.

The listing or discussion of an apparently prior-published document or apparently prior-published information in this specification should not necessarily be taken as an acknowledgement that the document or information is part of the state of the art or is common general knowledge.

Preferences and options for a given aspect, feature or parameter of the invention should, unless the context indicates otherwise, be regarded as having been disclosed in combination with any and all preferences and options for all other aspects, features and parameters of the invention.

## Claims

1. An electrical assembly (52) comprising:
a voltage source converter (20) including at least one energy storage device (48);
an energy storage system (54) electrically coupled to the voltage source converter (20), the energy storage system (54) controllable to release and absorb energy; and
a controller (50,56) programmed to selectively trigger a control of the energy storage system (54) to release energy or absorb energy responsive to a measurement of stored energy in the voltage source converter (20).

2. An electrical assembly (52) according to Claim 1 wherein the voltage source converter (20) includes at least one module (44), the or each module (44) including at least one switching element (46) and at least one energy storage device (48), the or each switching element (46) and the or each energy storage device (48) in the or each module (44) arranged to be combinable to selectively provide a voltage source.

3. An electrical assembly (52) according to Claim 1 or Claim 2 wherein the controller (50,56) is programmed to selectively trigger the control of the energy storage system (54) to release energy to or absorb energy from the voltage source converter (20) responsive to the measurement of stored energy (V^{Σ}) in the voltage source converter (20).

4. An electrical assembly (52) according to any one of the preceding claims wherein the controller (50,56) is programmed to selectively trigger the control of the energy storage system (54) to release energy to or absorb energy from an AC or DC system or network (40,38) connected to the voltage source converter (20) responsive to the measurement of stored energy (V^{Σ}) in the voltage source converter (20).

5. An electrical assembly (52) according to any one of the preceding claims wherein the controller (50,56) is programmed to selectively trigger the control of the energy storage system (54) to release energy or absorb energy responsive to a measurement of AC frequency of an AC system or network (40) connected to the voltage source converter (20) in the event of non-availability of the voltage source converter (20).

6. An electrical assembly (52) according to Claim 5 wherein the controller (50,56) is programmed to selectively trigger the control of the energy storage system (54) to release energy or absorb energy responsive to a rate of change in AC frequency of an AC system or network (40) connected to the voltage source converter (20) in the event of non-availability of the voltage source converter (20).

7. An electrical assembly (52) according to any one of the preceding claims wherein the controller (50,56) is programmed to selectively trigger the control of the energy storage system (54) to release energy or absorb energy responsive to a measurement of DC voltage of a DC system or network connected to the voltage source converter (20) in the event of non-availability of the voltage source converter (20).

8. An electrical assembly (52) according to Claim 7 wherein the controller (50,56) is programmed to selectively trigger the control of the energy storage system (54) to release energy or absorb energy responsive to a rate of change of DC voltage of a DC system or network connected to the voltage source converter (20) in the event of non-availability of the voltage source converter (20).

9. An electrical assembly (52) according to any one of the preceding claims wherein the controller (50,56) is programmed to selectively modify a voltage and/or an impedance of the voltage source converter (20) so as to modify the release or absorption of energy by the energy storage system (54).

10. An electrical assembly (52) according to any one of the preceding claims wherein the controller (50,56) is programmed to selectively trigger the control of the energy storage system (54) to release energy or absorb energy responsive to a measurement of stored energy in the voltage source converter (20) deviating from a reference value or range.

11. An electrical assembly (52) according to any one of the preceding claims wherein the measurement of stored energy includes a measurement of absolute stored energy.

12. An electrical assembly (52) according to any one of the preceding claims wherein the measurement of stored energy includes a measurement of average stored energy.

13. An electrical assembly (52) according to any one of the preceding claims wherein the measurement of stored energy includes a measurement of a change in stored energy or a rate of change in stored energy.

14. An electrical assembly (52) according to any one of the preceding claims wherein the measurement of stored energy includes a measurement of stored energy per converter phase of the voltage source converter (20).

15. An electrical assembly (52) according to any one of the preceding claims wherein the energy storage system (54) is connected on an AC side or a DC side of the voltage source converter (20).
